(19) Europäisches Patentamt
European Patent Office
Office européen des brevets

(11) **EP 2 985 627 B1**

(12) **EUROPEAN PATENT SPECIFICATION**

(45) Date of publication and mention
of the grant of the patent:
**07.12.2016 Bulletin 2016/49**

(51) Int Cl.:
***G01S 13/90*** *(2006.01)*

(21) Application number: **15188858.3**

(22) Date of filing: **08.10.2015**

(54) **METHOD AND DEVICE FOR IMPROVING QUALITY OF SCANSAR IMAGE**

VERFAHREN UND VORRICHTUNG ZUR VERBESSERUNG DER QUALITÄT EINES SCANSAR-BILDES

PROCÉDÉ ET DISPOSITIF POUR AMÉLIORER LA QUALITÉ D'IMAGE SCANSAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2015 CN 201510030676**

(43) Date of publication of application:
**17.02.2016 Bulletin 2016/07**

(73) Proprietor: **Institute of Electronics, Chinese Academy of Sciences**
**Beijing (CN)**

(72) Inventors:
• **Wang, Yu**
  **100190 Beijing (CN)**
• **Li, Ning**
  **100190 Beijing (CN)**
• **Deng, Yunkai**
  **100190 Beijing (CN)**
• **Zhang, Zhimin**
  **100190 Beijing (CN)**
• **Wang, Chunle**
  **100190 Beijing (CN)**
• **Wang, Wei**
  **100190 Beijing (CN)**

(74) Representative: **Gulde & Partner**
**Patent- und Rechtsanwaltskanzlei mbB**
**Wallstraße 58/59**
**10179 Berlin (DE)**

(56) References cited:
**CN-A- 104 049 254**

• **LI NING ET AL: "Extension and Evaluation of PGA in ScanSAR Mode using Full-Aperture Approach", IEEE GEOSCIENCE AND REMOTE SENSING LETTERS, IEEE SERVICE CENTER, NEW YORK, NY, US, vol. 12, no. 4, 6 January 2015 (2015-01-06), pages 870-874, XP011569504, ISSN: 1545-598X, DOI: 10.1109/LGRS.2014.2365521 [retrieved on 2015-01-06]**
• **SWINGLER D N ET AL: "Line-array beamforming using linear prediction for aperture interpolation and extrapolation", IEEE TRANSACTIONS ON ACOUSTICS, SPEECH AND SIGNAL PROCESSING, IEEE INC. NEW YORK, USA, vol. 37, no. 1, 1 January 1989 (1989-01-01), pages 16-30, XP011477907, ISSN: 0096-3518, DOI: 10.1109/29.17497**
• **THOMAS G MOORE ET AL: "Enhanced Imagery Using Spectral-Estimation-Based Techniques Enhanced Imagery Using Spectral-Estimation-Based Techniques", LINCOLN LABORATORY JOURNAL, vol. 10, no. 2, 1 January 1997 (1997-01-01), pages 171-186, XP055250143,**
• **JOSEPH SALZMAN ET AL: "Interrupted Synthetic Aperture Radar (SAR)", IEEE AEROSPACE AND ELECTRONIC SYSTEMS MAGAZINE, IEEE SERVICE CENTER, PISCATAWAY, NJ, US, vol. 17, no. 5, 1 May 2002 (2002-05-01), pages 33-39, XP011092453, ISSN: 0885-8985**
• **QI WANG ET AL: "A New Algorithm for Sparse Aperture Interpolation", IEEE GEOSCIENCE AND REMOTE SENSING LETTERS, IEEE SERVICE CENTER, NEW YORK, NY, US, vol. 4, no. 3, 1 July 2007 (2007-07-01), pages 480-484, XP011187267, ISSN: 1545-598X, DOI: 10.1109/LGRS.2007.897394**

• **RICHARD BAMLER ET AL: "ScanSAR Processing Using Standard High Precision SAR Algorithms", IEEE TRANSACTIONS ON GEOSCIENCE AND REMOTE SENSING, IEEE SERVICE CENTER, PISCATAWAY, NJ, US, vol. 34, no. 1, 1 January 1996 (1996-01-01), XP011020656, ISSN: 0196-2892**
• **PINHEIRO MURIEL ET AL: "Reconstruction of Coherent Pairs of Synthetic Aperture Radar Data Acquired in Interrupted Mode", IEEE TRANSACTIONS ON GEOSCIENCE AND REMOTE SENSING, IEEE SERVICE CENTER, PISCATAWAY, NJ, US, vol. 53, no. 4, 9 October 2014 (2014-10-09), pages 1876-1893, XP011561105, ISSN: 0196-2892, DOI: 10.1109/TGRS.2014.2350255 [retrieved on 2014-10-09]**

**Description**

**TECHNICAL FIELD**

The present disclosure relates to the technical field of Synthetic Aperture Radar (SAR) data processing, and in particular to a method and device for improving quality of a Scanning Synthetic Aperture Radar (ScanSAR) image

**BACKGROUND**

ScanSAR is an SAR mode that can obtain a wider swath than that in conventional SAR systems by sweeping the antenna beam periodically from the near range to far range. ScanSAR data generally consists of several sub-swaths, and each sub-swath of ScanSAR data comprises a set of bursts separated by periodical data gaps. The so-called burst refers to a series of successive pulse sequences which come from successive emission pulses. The azimuth resolution of an ScanSAR image only depends on duration of each burst, and several bursts are included within the length of each complete synthetic aperture.

At present, methods for processing ScanSAR data mainly include a SPECAN algorithm, an improved SPECAN algorithm, an extended Chirp Scaling (CS) algorithm, a full-aperture imaging algorithm and the like. The SPECAN algorithm and the improved SPECAN algorithm are widely used in medium accuracy applications, but are not so good in high-resolution cases, since these two algorithms correct only the Range Cell Migration (RCM) part. The extended CS algorithm takes advantage of the conventional CS and the SPECAN algorithms, and thus not only increases accuracy but also improves efficiency; however, this algorithm has to process ScanSAR data burst-by-burst and stitch processed data in the azimuth, thus increasing the computing burden; in addition, a frequency discontinuity exists when a target is stitched across two different bursts.

The current full-aperture imaging algorithm preserves phase information, and yields a product that shares the same geometric properties as the corresponding stripmap images, however, in the full-aperture imaging algorithm, coherently processed multiple bursts with gaps result in spikes which can contaminate the ScanSAR image and influence the interpretation. Although the spikes can be reduced by a low-pass filter, the residual effect is enough to cause image visually disturbances, and so far there is no other methods that can solve this problem.

To sum up, how to improve the full-aperture ScanSAR imaging algorithm, suppress or remove impacts from spikes and thus implement an improvement on quality of an ScanSAR image remains to be urgently solved.

Ning Li et al.: "Extension and Evaluation of PGA in ScanSAR Mode using Full-Aperture Approach" (IEEE Geoscience and Remote Sensing Letters, vol. 12, no. 4, January 06, 2015, pages 870-874) develops a ScanSAR autofocusing approach for airborne platforms in order to enable a testbed for spaceborne scanning synthetic aperture radar (ScanSAR) mode. Autofocusing algorithms, such as the phase gradient autofocus (PGA) algorithm, prove to be a useful postprocessing technique to get refocused synthetic aperture radar images. However, conventional stripmap PGA does not work in ScanSAR mode when the full-aperture approach is used, due to the periodic data gaps in each subswath. To solve this problem, we extend the stripmap PGA to ScanSAR with some modifications, mainly in the subaperture segmentation and phase error estimation steps. The performance of extended stripmap PGA is evaluated by an airborne ScanSAR data set containing different types of terrain, with a high spatial resolution up to 3.5 m in azimuth.

CN104049254A discloses a self-focusing method for a high-resolution scanning synthetic aperture radar. The self-focusing method comprises the steps that sub-aperture division is conducted on ScanSAR data of each sub surveying and mapping band of the scanning synthetic aperture radar; phase error estimation is conducted on each sub-aperture; phase error stitching is conducted on the obtained phase error of each sub-aperture, and the full-aperture phase error of each sub surveying and mapping band is obtained; full-aperture phase error correction and azimuth compression are conducted on the ScanSAR data of each sub surveying and mapping band. The invention further discloses a self-focusing device for the high-resolution scanning synthetic aperture radar.

David Swingler et al.: "Line-array beamforming using linear prediction for aperture interpolation and extrapolation" (IEEE Transactions on Acoustics, Speech, and Signal Processing, Vol. 37, no. 1, January 01, 1989, pages 16-30) demonstrates that linear prediction can be successfully utilized in conjunction with otherwise conventional narrow-band line-array beamforming for aperture extrapolation (APEX), where there are significant SNR (signal-to-noise ratio) and resolution advantages compared to the conventional approach, aperture interpolation, where faulty sensor data are replaced, and a combined technique (ALPINEX). The performance of all three methods is investigated in connection with both simulated and real data. The APEX technique is shown to be amenable to a simple theoretical treatment. Further, the approach is demonstrated to offer a practical performance comparable to the well-known high-resolution technique, MUSIC, when the observation time is short.

Thomas G. Moore et al.: "Enhanced Imagery Using Spectral-Estimation-Based Techniques" describes a class of algorithms that are based on the technique of bandwidth extrapolation, which uses a model-based spectral-estimation technique for generating synthetic radar data. The extrapolated radar data are combined with the measured radar data in a Fourier transform to produce images with high spectral resolution. The article describes the application of these algorithms to measured radar data from a small commercial aircraft in flight.

Joseph Salzman et al.: "interrupted synthetic aperture radar (SAR)" (IEEE Aerospace and Electronic Systems Magazine, vol. 17, no. 5, 1 May 2002, pages 33-39) discloses that the severe timeline demands imposed by the multi-mode functions of modern airborne radars utilizing active array antennas, may result in interrupted SAR data collections and consequent corrupted images. To recover the image quality, we interpolate the missing data using the Burg algorithm, allowing interruptratios of up to 30%.

Qi Wang et al.: "A New Algorithm for Sparse Aperture Interpolation" (IEEE Geoscience and Remote Sensing Letters, vol. 4, no. 3, 1 July 2007, pages 480-484) proposes a new algorithm for filling sparse aperture synthetic aperture radar (SAR)/inverse SAR (ISAR) data, which applies for widely gapped apertures. An Estimating Signal Parameter via Rotational Invariance Techniques (ESPRIT)-based parametric approach is first used to estimate the power distribution with the sparse data. With the estimated power spectrum as prior information, by minimizing a weighted norm as a constraint, the full aperture data can be estimated. Although the algorithm is proposed for the sparse aperture interpolation in SAR/ISAR, it can be applied to other gapped data spectral estimation problems as well. Both numerical and experimental examples are provided to demonstrate the performance of the proposed algorithm.

Richard Bamler et al.: "ScanSAR processing using standard high precision SAR algorithms" (IEEE Transactions on Geoscience and Remote Sensing, vol. 34, no. 3, 1 January 1996, pages 480-484) shows processing ScanSAR or burst-mode SAR data by standard high precision algorithms (e.g., range/Doppler, wavenumber domain, or chirp scaling) to be an interesting alternative to the normally used SPECAN (or deramp) algorithm. Long burst trains with zeroes inserted into the interburst intervals can be processed coherently. This kind of processing preserves the phase information of the data-an important aspect for ScanSARinterferometry. Due to the interference of the burst images the impulse response shows a periodic modulation that can be eliminated by a subsequent low-pass filtering of the detected image. This strategy allows an easy and safe adaptation of existing SAR processors to ScanSAR data if throughput is not an issue. The images are automatically consistent with regular SAR mode images both with respect to geometry and radiometry. The amount and diversity of the software for a multimode SAR processor are reduced. The impulse response and transfer functions of a burst-mode end-to-end system are derived. Special attention is drawn to the achievable image quality, the radiometric accuracy, and the effective number of looks. The scalloping effect known from burst-mode systems can be controlled by the spectral weighting of the processor transfer function. It is shown that the fact that the burst cycle period is in general not an integer multiple of the sampling grid distance does not complicate the algorithm. An image example using X-SAR data for simulation of a burst system is presented.

## SUMMARY

In view of the above, embodiments of the present disclosure are intended to provide a method and device for improving quality of an ScanSAR image, which can improve the full-aperture ScanSAR imaging algorithm, suppress or remove impacts from spikes, thereby implementing an improvement on quality of the ScanSAR image.

To this end, the technical solutions of embodiments of the present disclosure are implemented as follows.

An embodiment of the present disclosure provides a method for improving quality of an ScanSAR image, and the method includes:

range compression and Range Cell Migration Correction (RCMC) are performed on each sub-swath of ScanSAR data;
sub-aperture segmentation is performed on the ScanSAR data subjected to the range compression and the RCMC;
aperture interpolation is performed on each sub-aperture data; and
azimuth compression is performed on the sub-aperture data subjected to the aperture interpolation,
wherein the step that aperture interpolation is performed on each sub-aperture data may include:

an azimuth chirp of each sub-aperture is removed;
data gaps between sub-aperture data are filled using a Linear Prediction Model based Aperture Interpolation Technique (LPM-AIT); and
a sub-aperture signal format corresponding to a standard ScanSAR mode is recovered,
wherein the step that sub-aperture segmentation is performed on the ScanSAR data subjected to the range compression and the RCMC may include:

the sub-aperture segmentation is performed on the ScanSAR data subjected to the range compression and the RCMC in such a way that one burst is overlapped for adjacent sub-apertures, wherein each sub-aperture includes two bursts and one data gap.

In the above solution, before range compression and RCMC are performed on received ScanSAR data, the method may further include: data gaps between each sub-swath of ScanSAR data are filled with zeros to generate continuous ScanSAR data.

In the above solution, the step that an azimuth chirp of each sub-aperture is removed may include that dechirp processing is performed on each sub-aperture data in the azimuth to remove the azimuth chirp of each sub-aperture; and

the step that a sub-aperture signal format corresponding to a standard ScanSAR mode is recovered may include that the sub-aperture signal format corresponding to the standard ScanSAR mode is recovered by an inverse operation of dechirp processing of each sub-aperture data in the azimuth.

An embodiment of the present disclosure further provides a device for improving quality of an ScanSAR image, and the device includes a range processing module, a sub-aperture segmentation module, an interpolation module and an azimuth processing module, wherein

the range processing module is configured to perform range compression and RCMC on each sub-swath of ScanSAR data;

the sub-aperture segmentation module is configured to perform sub-aperture segmentation on the ScanSAR data subjected to the range compression and the RCMC;

the interpolation module is configured to perform aperture interpolation on each sub-aperture data; and

the azimuth processing module is configured to perform azimuth compression on the sub-aperture data subjected to the aperture interpolation,

wherein the interpolation module may be specifically configured to:

remove an azimuth chirp of each sub-aperture;

fill data gaps between sub-aperture data using an LPM-AIT; and

recover a sub-aperture signal format corresponding to a standard ScanSAR mode,

wherein the sub-aperture segmentation module may be specifically configured to:

perform sub-aperture segmentation on the ScanSAR data subjected to the range compression and the RCMC in such a way that one burst is overlapped for adjacent sub-apertures, wherein each sub-aperture comprises two bursts and one data gap.

In the above solution, the device may further include a pre-processing module configured to, before the range compression and the RCMC are performed on received ScanSAR data, fill data gaps between each sub-swath of ScanSAR data with zeros to generate continuous ScanSAR data.

In the above solution, the interpolation module may be specifically configured to:

perform dechirp processing on each sub-aperture data in the azimuth to remove the azimuth chirp of each sub-aperture; and

recover the sub-aperture signal format corresponding to the standard ScanSAR mode by an inverse operation of dechirp processing of each sub-aperture data in the azimuth.

In the method and device for improving quality of an ScanSAR image according to embodiments of the present disclosure: firstly, range compression and RCMC are performed on each sub-swath of ScanSAR data; then sub-aperture segmentation is performed on the ScanSAR data subjected to the range compression and the RCMC; after that, aperture interpolation is performed on each sub-aperture data; finally, azimuth compression is performed on the sub-aperture data subjected to the aperture interpolation to obtain a final quality-improved ScanSAR image. In this way, it is possible to improve the full-aperture ScanSAR imaging algorithm, suppress or remove impacts from spikes, thereby implementing an improvement on quality of an ScanSAR image.

**BRIEF DESCRIPTION OF THE DRAWINGS**

Fig. 1 is a schematic flow chart of a method for improving quality of an ScanSAR image according to an embodiment of the present disclosure;

Fig, 2 is a schematic diagram showing the structure of ScanSAR data according to an embodiment of the present disclosure;

Fig. 3 is a schematic diagram showing sub-aperture segmentation according to an embodiment of the present disclosure;

Fig. 4 is a schematic diagram showing aperture interpolation of sub-aperture data according to an embodiment of the present disclosure;

Fig. 5 is a schematic diagram showing a result obtained from measured ScanSAR data processed by a method for improving quality of an ScanSAR image according to an embodiment of the present disclosure;

Fig. 6 is a schematic diagram showing comparison between a conventional imaging method and a method for improving quality of an ScanSAR image according to an embodiment of the present disclosure; and

Fig. 7 is a schematic structural diagram of a device for improving quality of an ScanSAR image according to an embodiment of the present disclosure.

## DETAILED DESCRIPTION

In an embodiment of the present disclosure, firstly, range compression and RCMC are performed on each sub-swath of ScanSAR data; then sub-aperture segmentation is performed on the ScanSAR data subjected to the range compression and the RCMC; aperture interpolation is then performed on each sub-aperture data; finally, azimuth compression is performed on the sub-aperture data subjected to the aperture interpolation to obtain a final quality-improved ScanSAR image.

In practical applications, a complete ScanSAR image includes multiple sub-swaths, the above process is for one sub-swath, and each sub-swath of ScanSAR data needs to be processed according to the above process so as to implement processing of data of the complete ScanSAR image.

Implementation of technical solutions according to the embodiments of the present disclosure will be further elaborated below in combination with accompanying drawings and specific embodiments.

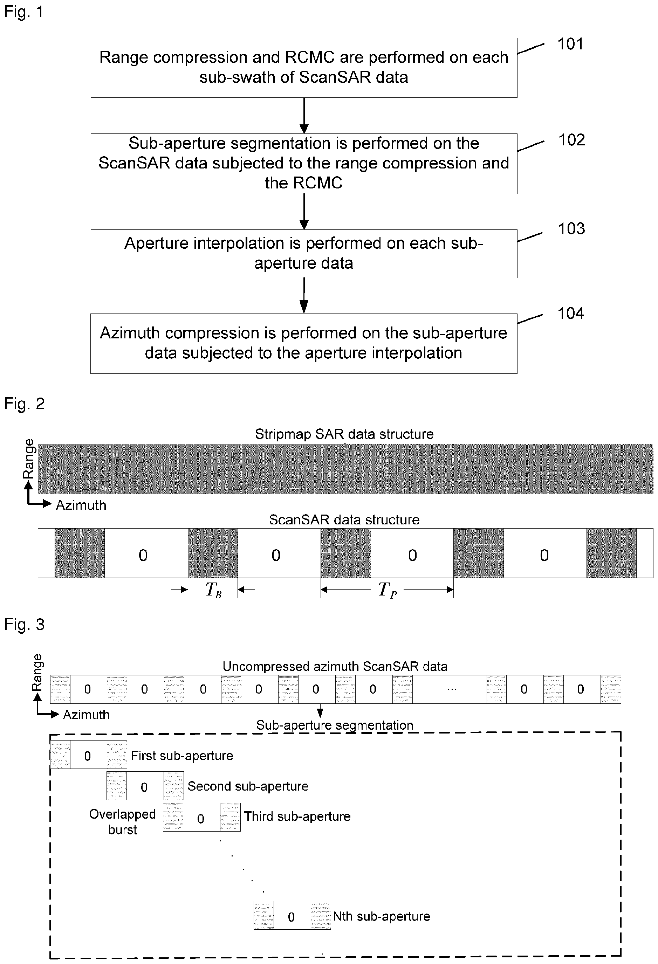

Fig. 1 is a schematic flow chart of a method for improving quality of an ScanSAR image according to an embodiment of the present disclosure; as shown in Fig. 1, the method for improving quality of an ScanSAR image according to the embodiment of the present disclosure includes the following steps:

step 101, range compression and RCMC are performed on each sub-swath of ScanSAR data;

In the embodiment of the present disclosure, before range compression and RCMC are performed on received ScanSAR data, the method may further include that data gaps between each sub-swath of ScanSAR data are filled with zeros to generate continuous ScanSAR data.

Fig. 2 is a schematic diagram showing the structure of ScanSAR data according to an embodiment of the present disclosure; as shown in Fig. 2, the ScanSAR data is different from stripmap data, and there are data gaps in the ScanSAR data, wherein $T_P$ is the burst cycle period and $T_B$ is the burst duration. Therefore, in the embodiment of the present disclosure, firstly, data gaps between each sub-swath of ScanSAR data are filled with zeros to generate continuous ScanSAR data like stripmap data, and then range compression and RCMC are performed on the generated ScanSAR data to obtain uncompressed azimuth ScanSAR data.

In the embodiment of the present disclosure, data obtained after the range compression and the RCMC are performed on the received sub-swath of data can be expressed as:

$$s_{raw}(\tau, t) = A_0 \cdot p_r\left(\tau - \frac{2 \cdot R_0}{c}\right) \cdot \exp\left(-j\frac{4\pi f_0 R_0}{c}\right) \sum_n \text{rect}\left(\frac{t - nT_p}{T_B}\right) \exp\left(j\pi k_a t^2\right) \qquad (1)$$

with azimuth spectrum

$$S_{raw}(\tau, f) = A_0 \cdot p_r\left(\tau - \frac{2 \cdot R_0}{c}\right) \cdot \exp\left(-\frac{j4\pi f_0 R_0}{c}\right) \sum_n \text{rect}\left(\frac{f + nW_P + k_a t_0}{W_B}\right) \exp\left(-\frac{j\pi f^2}{k_a}\right) \qquad (2)$$

where $\tau$ is the range fast time, $t$ is the azimuth slow time, $A_0$ is an arbitrary complex constant, $P_r(\cdot)$ is the compressed pulse envelop in range, $R_0$ is the referred slant range, $c$ is the speed of light, $f_0$ is the radar frequency, $k_a$ is the azimuth chirp rate, $n$ is the burst number, $f$ is the azimuth frequency, $W_P$ is the spectral burst cycle period, and $W_B$ is the burst bandwidth.

When multiple bursts are processed coherently, the time-domain representation of the point impulse response is given by

$$h(\tau,t) = A_0 \cdot p_r\left(\tau - \frac{2 \cdot R_0}{c}\right)\exp\left(-\frac{j4\pi f_0 R_0}{c}\right)\text{sinc}\left(k_a T_B t\right)\frac{1}{k_a T_P}\sum_n h_A\left(t - \frac{n}{k_a T_P}\right) \quad (3)$$

where $h_A$ is the full-aperture azimuth point response without zeros.

It can be drawn from (3), i.e., the time-domain representation of the point impulse response, that the azimuth impulse response function exhibits strong interference modulations caused by data gaps, termed spikes in the presented disclosure. Spikes may strongly disturb ScanSAR images in vision, and especially for targets with strong backscattered coefficients, spikes may directly damage quality of images imaged using the full-aperture imaging algorithm. Therefore, it is required to further process the data subjected to the range compression and the RCMC so as to remove impacts from spikes.

Step 102, sub-aperture segmentation is performed on the ScanSAR data subjected to the range compression and the RCMC;

in the embodiment of the present disclosure, the step that sub-aperture segmentation is performed on the ScanSAR data subjected to the range compression and the RCMC may include: the sub-aperture segmentation is performed on the ScanSAR data subjected to the range compression and the RCMC in such a way that one burst is overlapped for adjacent sub-apertures, wherein each sub-aperture includes two bursts and one data gap.

Specifically, since aperture interpolation is required to be performed on each sub-aperture data in subsequent processing processes, it is required to perform sub-aperture segmentation to avoid azimuth ambiguity; in addition, in order to meet conditions for performing interpolation on sub-apertures in subsequent processing processes, each sub-aperture should be short enough to ensure phase history of any point can cover most of parts of its segment. In the embodiment of the present disclosure, each sub-aperture includes two bursts and one data gap and one burst is overlapped for adjacent sub-apertures, and such a configuration is applicable to most of ScanSAR systems; the sub-aperture segmentation according to the embodiment of the present disclosure is as shown in Fig. 3.

Step 103: aperture interpolation is performed on each sub-aperture data;

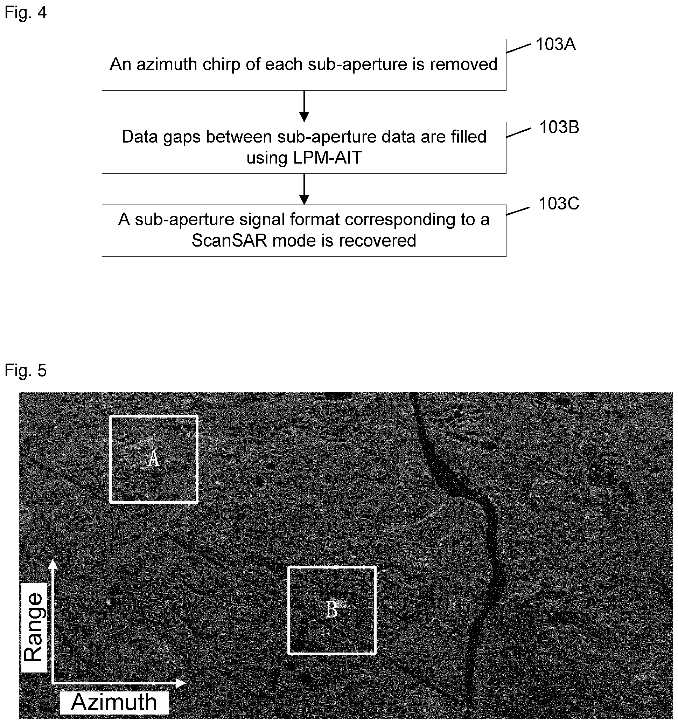

The aperture interpolation of sub-aperture data according to an embodiment of the present disclosure is as shown in Fig. 4, which includes the following steps:

step 103A, an azimuth chirp of each sub-aperture is removed;

The step that an azimuth chirp of each sub-aperture is removed may include: dechirp processing is performed on each sub-aperture data in the azimuth to remove the azimuth chirp of each sub-aperture;

specifically, the ScanSAR data subjected to the range compression and the RCMC is multiplied by the complex conjugation of the azimuth chirp to remove the azimuth chirp of each sub-aperture so that the dechirped signal has a same structure as that of inverse/spotlight SAR data and can be used for aperture interpolation.

Step 103B, data gaps between sub-aperture data are filled using the LPM-AIT;

in the step, data gaps between sub-aperture data are filled using the LPM-AIT, and for inverse/spotlight SAR data, under high frequency approximation, the frequency response for a target is:

$$H_{i,s}\left(f_r,t\right) = \sum_i A_i\left(f_r,t\right)\exp\left(\frac{j4\pi f_r R_i\left(t\right)}{c}\right) \quad (4)$$

where $f_r$ is the radar frequency, $t$ is azimuth time, and $A_i$ and $R_i$ are the amplitude and effective range of the ith scattering center. In the embodiment of the present disclosure, the data after the azimuth chirp of each sub-aperture is removed has a same structure as that of inverse/spotlight SAR data, and herein the filling process of data gaps between sub-aperture data is described using sub-aperture data having only one gap.

It can be drawn from the frequency response of the target as expressed by (4) that sub-aperture data with a gap can be expressed as:

$$g\left(n\right) = \begin{cases} H_{i,s}\left(f_r, n \cdot \Delta t\right), & for\ 1 \le n < B\ or\ E < n \le N \\ 0, & \text{elsewhere} \end{cases} \quad (5)$$

where $n$ denotes the pulse number ($n = 1,2,...,N$), $\Delta t$ denotes the pulse repetition interval, the subscript indexes of missing data are from B to E.

The frequency response expressed by (5) is approximated by Linear Prediction Mode (LPM), and if the data gaps are interpolated independently from both sides, two sets of data would be extrapolated into the gap,

$$\begin{cases} g_1(n) = -\sum_{p=1}^{P} a(p) \cdot g(n-p), & n = B, B+1, ..., E \\ g_2(n) = -\sum_{p=1}^{P} a^*(p) \cdot g(n+p), & n = E, E-1, ..., B \end{cases} \qquad (6)$$

where $a(\cdot)$ is the coefficients of the AR-LPM and $P$ is the order of the model.

In the embodiment of the present disclosure, the computation is performed using the Burg algorithm; in addition, to avoid the inconsistent extrapolated data from two sides, finally the data gaps are filled by using a weight sum of the extrapolated data, and the filling of data gaps are expressed as:

$$\hat{g}(n) = \left(\frac{E-n}{E-B}\right) g_1(n) + \left(\frac{n-B}{E-B}\right) g_2(n), \quad \text{where } B \le n \le E \quad (7).$$

Step 103C, a sub-aperture signal format corresponding to a standard ScanSAR mode is recovered.

The step that a sub-aperture signal format corresponding to a standard ScanSAR mode is recovered may include: the sub-aperture signal format corresponding to the standard ScanSAR mode is recovered by an inverse operation of dechirp processing of each sub-aperture data in the azimuth.

Specifically, the sub-aperture signal format corresponding to the standard ScanSAR mode is recovered by an inverse operation of the dechirp processing in step 103A.

After above steps, the data gaps between sub-apertures in the ScanSAR data are recovered.

Step 104, azimuth compression is performed on the sub-aperture data subjected to the aperture interpolation.

In the embodiment of the present disclosure, after all data gaps between sub-aperture data are filled, ScanSAR data including all sub-apertures but without gaps is obtained; finally, the azimuth compression is performed to acquire a high quality ScanSAR image.

In practical applications, a complete ScanSAR image includes multiple sub-swaths, the above process is for one sub-swath, and each sub-swath of ScanSAR data needs to be processed according to the above process so as to implement full-aperture processing of data of the complete ScanSAR image.

Technical effects of the method for improving quality of an ScanSAR image according to the embodiment of the present disclosure will be elaborated in conjunction with practical implementation processes. The data used in the embodiments of the present disclosure are real radar data collected in an airborne ScanSAR mode, which are provided by and used under the authorization of Division of Aerospace Microwave Remote Sensing System, Institute of Electronics, Chinese Academy of Sciences (IECAS). Fig. 5 is a schematic diagram showing a result obtained from measured ScanSAR data processed by a method for improving quality of an ScanSAR image according to an embodiment of the present disclosure. It can be seen that the overall ScanSAR image is well focused and no obvious spike phenomena exist.

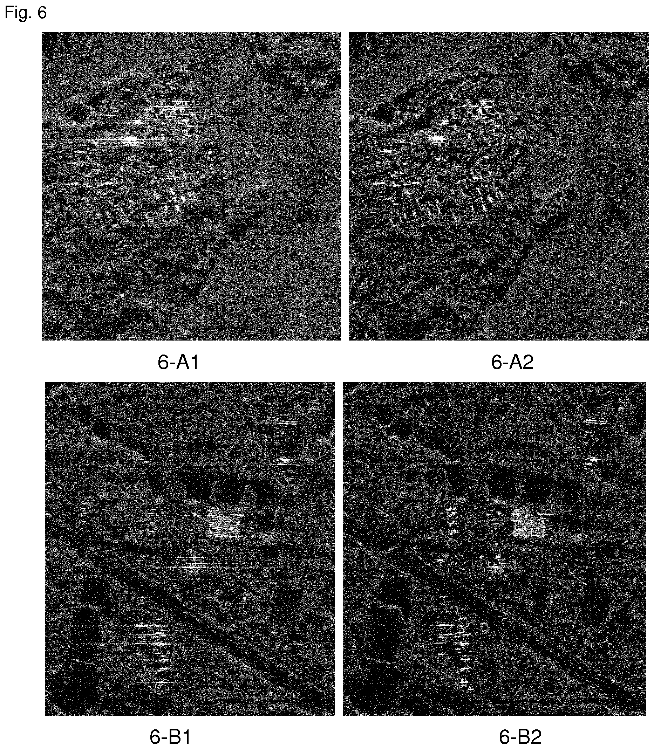

To further show the advantages of the method for improving quality of an ScanSAR image according to the embodiment of the present disclosure, two typical local scenes highlighted in Fig. 5 by areas A and B, are zoomed into and compared with scenes processed with a conventional approach to validate technical effects of the solution according to the embodiment of the present disclosure, where area A is a construction area and area B is a rural area. Fig. 6 is a schematic diagram showing comparison between a method for improving quality of an ScanSAR image according to an embodiment of the present disclosure and a conventional imaging method, wherein Fig. 6-A1 shows an image obtained from data of area A processed by conventional approach, while Fig. 6-A2 shows an image obtained from data of area A processed by the method for improving quality of an ScanSAR image according to the embodiment of the present disclosure, and it can be seen from Fig. 6-A1 and Fig. 6-A2 that the spikes caused by man-made structures are effectively suppressed and the contours of the river are more distinguishable after the usage of the method for improving an quality of an ScanSAR image according to the embodiment of the present disclosure; Fig. 6-B1 shows an image obtained from data of area B processed by conventional approach, while Fig. 6-B2 shows an image obtained from data of area B processed by the method for improving quality of an ScanSAR image according to the embodiment of the present disclosure, and it can be seen from Fig. 6-B1 and Fig. 6-B2 that spikes neighboring the strong scatterers are greatly reduced, the water regions are at higher contrast and thus the quality of images are improved greatly. In this way, the effectiveness and applicability of the technical solution according to the embodiment of the present disclosure are validated.

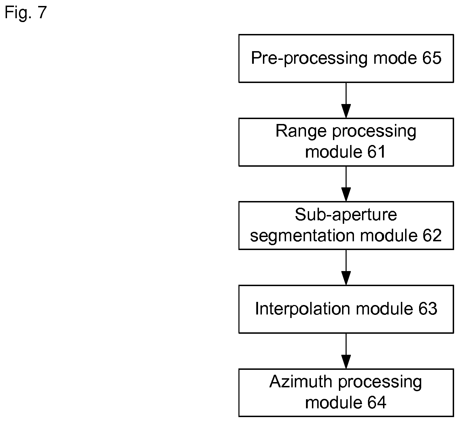

An embodiment of the present disclosure further provides a device for improving quality of a high-resolution ScanSAR image, as shown in Fig.7, the device includes a range processing module 61, a sub-aperture segmentation module 62, an interpolation module 63 and an azimuth processing module 64, wherein

the range processing module 61 is configured to perform range compression and RCMC on each sub-swath of ScanSAR data;

In the embodiment of the present disclosure, the device further includes a pre-processing module 65 configured to, before the range compression and the RCMC are performed on received ScanSAR data, fill data gaps between each sub-swath of ScanSAR data with zeros to generate continuous ScanSAR data.

The ScanSAR data is different from stripmap data and there are data gaps in the ScanSAR data, therefore, in the embodiment of the present disclosure, firstly, the pre-processing module 65 fills data gaps between each sub-swath of ScanSAR data with zeros to generate ScanSAR data that are as continuous as the stripmap data, and then the range processing module 61 performs range compression and RCMC to obtain uncompressed azimuth ScanSAR data.

In the embodiment of the present disclosure, data $S_{raw}(\tau,t)$ obtained after the range processing module 61 performs the range compression and the RCMC on the received sub-swath of data can be expressed as:

$$s_{raw}(\tau,t) = A_0 \cdot p_r\left(\tau - \frac{2 \cdot R_0}{c}\right) \cdot \exp\left(-j\frac{4\pi f_0 R_0}{c}\right) \sum_n \mathrm{rect}\left(\frac{t - nT_p}{T_B}\right) \exp\left(j\pi k_a t^2\right)$$

with azimuth spectrum

$$S_{raw}(\tau,f) = A_0 \cdot p_r\left(\tau - \frac{2 \cdot R_0}{c}\right) \cdot \exp\left(-\frac{j4\pi f_0 R_0}{c}\right) \sum_n \mathrm{rect}\left(\frac{f + nW_P + k_a t_0}{W_B}\right) \exp\left(-\frac{j\pi f^2}{k_a}\right)$$

where $\tau$ is the range fast time, $t$ is the azimuth slow time, $A_0$ is an arbitrary complex constant, $P_r(\bullet)$ is the compressed pulse envelop in range, $R_0$ is the referred slant range, $c$ is the speed of light, $f_0$ is the radar frequency, $k_a$ is the azimuth chirp rate, $n$ is the burst number, $f$ is the azimuth frequency, $W_P$ is the spectral burst cycle period, and $W_B$ is the burst bandwidth.

When multiple bursts are processed coherently, the time-domain representation of the point impulse response is given by

$$h(\tau,t) = A_0 \cdot p_r\left(\tau - \frac{2 \cdot R_0}{c}\right) \exp\left(-\frac{j4\pi f_0 R_0}{c}\right) \mathrm{sinc}\left(k_a T_B t\right) \frac{1}{k_a T_P} \sum_n h_A\left(t - \frac{n}{k_a T_P}\right)$$

where $h_A$ is the full-aperture (stripmap) azimuth point response without zeros.

It can be drawn from the time-domain representation of the point impulse response, that the azimuth impulse response function exhibits strong interference modulations caused by data gaps, termed spikes in the present disclosure. Spikes can disturb ScanSAR images in vision, and especially for targets with strong backscattered coefficients, spikes may directly damage quality of images imaged using the full-aperture imaging algorithm. Therefore, it is required to further process the data subjected to the range compression and the RCMC so as to remove impacts from spikes.

The sub-aperture segmentation module 62 is configured to perform sub-aperture segmentation on the ScanSAR data subjected to the range compression and the RCMC;

In the embodiment of the present disclosure, the sub-aperture segmentation module 62 is further configured to perform sub-aperture segmentation on each sub-swath of ScanSAR data in such a way that one burst is overlapped for adjacent sub-apertures, wherein each sub-aperture comprises two bursts and one data gap.

Specifically, since aperture interpolation is required to be performed on each sub-aperture data in subsequent processing processes, it is required to perform sub-aperture segmentation to avoid azimuth ambiguity; in addition, in order to meet conditions for performing interpolation on sub-apertures in subsequent processing processes, each sub-aperture should be short enough to ensure phase history of any point can cover most of parts of its segment. In the embodiment of the present disclosure, each sub-aperture segmented by the sub-aperture segmentation module 62 includes two bursts and one data gap, and one burst is overlapped for adjacent sub-apertures, and such a configuration is applicable to most of ScanSAR systems.

The interpolation module 63 is configured to perform aperture interpolation on each sub-aperture data;

in the embodiment of the present disclosure, the interpolation module 63 is specifically configured to remove the azimuth chirp of each sub-aperture, fill data gaps between sub-aperture data using LPM-AIT and recover a sub-aperture signal format corresponding to a standard ScanSAR mode.

The removal of the azimuth chirp of each sub-aperture by the interpolation module 63 includes that dechirp processing is performed on each sub-aperture data in the azimuth to remove the azimuth chirp of each sub-aperture; specifically, the ScanSAR data subjected to the range compression and the RCMC is multiplied by the complex conjugation of the azimuth chirp to remove the azimuth chirp of each sub-aperture so that the dechirped signal has a same structure as that of inverse/spotlight SAR data and can be used for aperture interpolation.

During the filling of data gaps between sub-aperture data using the LPM-AIT by the interpolation module 63, for inverse/spotlight SAR data, under high frequency approximation, the frequency response for a target is:

$$H_{i,s}\left(f_r,t\right) = \sum_i A_i\left(f_r,t\right)\exp\left(\frac{j4\pi f_r R_i\left(t\right)}{c}\right)$$

where $f_r$ is the radar frequency, $t$ is azimuth time, and $A_i$ and $R_i$ are the amplitude and effective range of the ith scattering center. In the embodiment of the present disclosure, the data after the azimuth chirp of each sub-aperture is removed has a same structure as that of inverse/spotlight SAR data, and herein the filling process of data gaps between sub-aperture data is described using sub-aperture data having only one gap.

It can be drawn from the frequency response of the target as expressed by the above formula that sub-aperture data with a gap can be expressed as:

$$g\left(n\right) = \begin{cases} H_{i,s}\left(f_r,n\cdot\Delta t\right), & for\, 1 \le n < B \text{ or } E < n \le N \\ 0, & \text{elsewhere} \end{cases}$$

where $n$ denotes the pulse number ($n = 1,2,...,N$), $\Delta t$ denotes the pulse repetition interval, the subscript indexes of missing data are from B to E.

The frequency response expressed by the above formula can be approximated by the LPM, and if the data gaps are interpolated independently from both sides, two sets of data would be extrapolated into the gap,

$$\begin{cases} g_1\left(n\right) = -\sum_{p=1}^{P} a(p)\cdot g(n-p), & n = B, B+1,...,E \\ g_2\left(n\right) = -\sum_{p=1}^{P} a^*(p)\cdot g(n+p), & n = E, E-1,...,B \end{cases} \tag{6}$$

where $a(\cdot)$ is the coefficients of the AR-LPM and $P$ is the order of the model.

In the embodiment of the present disclosure, the computation is performed using the Burg algorithm. In addition, to avoid the inconsistent extrapolated data from two sides, finally the data gaps are filled by using a weight sum of the extrapolated data, and the data gaps are expressed as:

$$\hat{g}(n) = \left(\frac{E-n}{E-B}\right)g_1(n) + \left(\frac{n-B}{E-B}\right)g_2(n), \quad \text{where } B \le n \le E$$

The recovering of a sub-aperture signal format corresponding to a standard ScanSAR mode by the interpolation module 63 includes: the sub-aperture signal format corresponding to the standard ScanSAR mode is recovered by an inverse operation of dechirp processing of each sub-aperture data in the azimuth.

The azimuth processing module 64 is configured to perform azimuth compression on the sub-aperture data subjected to the aperture interpolation.

Specifically, after all data gaps between sub-aperture data are filled, ScanSAR data including all sub-apertures but without gaps is obtained; finally, the azimuth processing module 64 performs azimuth compression to acquire a high quality ScanSAR image.

Functions implemented by respective processing units of the device for improving quality of a high-resolution ScanSAR image shown in Fig. 7 can be understood by related description made to the above method for improving quality of a high-resolution ScanSAR image. It should be appreciated by those skilled in the art that the functions of respective processing units of the device for improving quality of a high-resolution ScanSAR image shown in Fig. 7 can be implemented by a program running on a processor, and can also be implemented by specific logic circuits such as implemented by a Central Processing Unit (CPU), a Micro Processing unit (MPU), a Digital Signal Processor (DSP) or a Field Programmable Gate Array (FPGA); the storage unit can also be implemented by various memories or storage media.

In the embodiments provided by the present disclosure, it should be appreciated that the disclosed method and device can be implemented by other approaches. The device embodiment described above is for illustration only, for example, the division of units is only a division of logic functions and may be divided in other ways during practical implementation, for example, multiple units or components may be combined or integrated into another system, or some features may be omitted or not implemented. In addition, the displayed or discussed communication connections between respective components may be indirect coupling or communication connections through some interfaces, devices or units, which may be electrical, mechanical or other coupling or communication connections.

Units described above as separate components may or may not be physically separated, components displayed as units may or may not be physical units, namely may be located in one place or distributed onto multiple network elements; some or all of the units may be selected as required to achieve aims of the solution according to the present embodiment.

In addition, respective function units in respective embodiments of the present disclosure may be integrated into one processing unit or may be independent units, and two or more units may be integrated into one unit; integrated units may be implemented not only by hardware but also by hardware plus software functional unit.

It can be appreciated by those skilled in the art that all or part of steps implementing above method embodiments may be carried out by related hardware under the instruction of programs that may be stored in computer-readable storage medium and implement steps of the above method embodiment; and the storage medium includes various media that can store program codes, such as a mobile storage device, a Read-Only Memory (ROM), a magnetic disk, an optical disk and the like.

Or, when an integrated module according to embodiments of the present disclosure is implemented in the form of a software functional module and sold or used as an independent product, it may also be stored in a computer-readable storage medium. Based on such understanding, the technical solutions according to embodiments of the present disclosure in essence or the part contributing to the prior art can be embodied in the form of a software product, and the computer software product is stored in a storage medium, which includes several instructions so that a computer device (may be a personal computer, a server, a network device or the like) implements all or part of the method according to respective embodiments of the present disclosure. The aforementioned storage medium includes various media that can store program codes, such as a mobile storage device, a Read-Only Memory (ROM), a magnetic disk, an optical disk and the like.

The method and device for improving quality of an ScanSAR image are described by taking the above embodiments as examples, but they are not limited thereto, and all methods and devices for improving quality of an ScanSAR image fall within the scope of protection of the present disclosure.

What described are merely preferable embodiments of the present disclosure, and are not intended to limit the present disclosure.

**Claims**

**1.** A method for improving quality of a Scanning Synthetic Aperture Radar, ScanSAR, image, comprising:

performing range compression and Range Cell Migration Correction, RCMC, on each sub-swath of ScanSAR data (101);
performing sub-aperture segmentation on the ScanSAR data subjected to the range compression and the RCMC (102);
performing aperture interpolation on each sub-aperture data (103); and
performing azimuth compression on the sub-aperture data subjected to the aperture interpolation (104),
wherein the step of performing aperture interpolation on each sub-aperture data (103) comprises:

removing an azimuth chirp of each sub-aperture (103A);
filling data gaps between sub-aperture data using a Linear Prediction Model based Aperture Interpolation Technique, LPM-AIT (103B); and
recovering a sub-aperture signal format corresponding to a standard ScanSAR mode (103C),
**characterized in that** the step of performing sub-aperture segmentation on the data subjected to the range compression and the RCMC (102) comprises:

performing sub-aperture segmentation on the ScanSAR data subjected to the range compression and the RCMC in such a way that one burst is overlapped for adjacent sub-apertures, wherein each sub-aperture comprises two bursts and one data gap.

**2.** The method according to claim 1, further comprising:

before performing range compression and RCMC on received ScanSAR data (101), filling data gaps between each sub-swath of ScanSAR data with zeros to generate continuous ScanSAR data.

**3.** The method according to claim 1, wherein the step of removing an azimuth chirp of each sub-aperture (103A) comprises: performing dechirp processing on each sub-aperture data in the azimuth to remove the azimuth chirp of each sub-aperture; and

wherein the step of recovering a sub-aperture signal format corresponding to a standard ScanSAR mode (103C) comprises: recovering the sub-aperture signal format corresponding to the standard ScanSAR mode by an inverse operation of dechirp processing of each sub-aperture data in the azimuth.

**4.** A device for improving quality of a Scanning Synthetic Aperture Radar, ScanSAR, image, comprising a range processing module (61), a sub-aperture segmentation module (62), an interpolation module (63) and an azimuth processing module (64), wherein

the range processing module (61) is configured to perform range compression and Range Cell Migration Correction, RCMC, on each sub-swath of ScanSAR data;

the sub-aperture segmentation module (62) is configured to perform sub-aperture segmentation on the ScanSAR data subjected to the range compression and the RCMC;

the interpolation module (63) is configured to perform aperture interpolation on each sub-aperture data; and

the azimuth processing module (64) is configured to perform azimuth compression on the sub-aperture data subjected to the aperture interpolation,

wherein the interpolation module (63) is specifically configured to:

remove an azimuth chirp of each sub-aperture;

fill data gaps between sub-aperture data using a Linear Prediction Model based on Aperture Interpolation Techniques, LPM-AIT; and

recover a sub-aperture signal format corresponding to a standard ScanSAR mode,

**characterized in that** the sub-aperture segmentation module (62) is specifically configured to:

perform sub-aperture segmentation on the ScanSAR data subjected to the range compression and the RCMC in such a way that one burst is overlapped for adjacent sub-apertures, wherein each sub-aperture comprises two bursts and one data gap.

**5.** The device according to claim 4, further comprising a pre-processing module (65) configured to, before the range compression and the RCMC are performed on received ScanSAR data, fill data gaps between each sub-swath of ScanSAR data with zeros to generate continuous ScanSAR data.

**6.** The device according to claim 1, wherein the interpolation module (63) is specifically configured to:

performing dechirp processing on each sub-aperture data in azimuth to remove the azimuth chirp of each sub-aperture; and

recover the sub-aperture signal format corresponding to the standard ScanSAR mode by an inverse operation of dechirp processing of each sub-aperture data in the azimuth.

**Patentansprüche**

**1.** Verfahren zum Verbessern der Qualität eines Bildes eines scannenden Radars mit synthetischer Apertur (Scanning Synthetic Aperture Radar), ScanSAR, das Folgendes umfasst:

Durchführen von Bereichskompression und Bereichszellenmigrationskorrektur (Range Cell Migration Correction), RCMC, an jedem Teilstreifen der ScanSAR-Daten (101);

Durchführen der Subapertursegmentierung an den ScanSAR-Daten, die der Bereichskompression und der RCMC (102) unterzogen werden;

Durchführen der Aperturinterpolation an allen Subaperturdaten (103); und

Durchführen der Azimutkompression an den Subaperturdaten, die der Aperturinterpolation (104) unterzogen werden,

wobei der Schritt des Durchführens der Aperturinterpolation an allen Subaperturdaten (103) Folgendes umfasst:

Entfernen eines Azimut-Chirps jeder Subapertur (103A);
Auffüllen der Datenlücken zwischen den Subaperturdaten unter Verwendung eines linearen Prädiktionsmodells (Linear Prediction Model) auf der Basis der Aperturinterpolationstechnik (Linear Prediction Model based Aperture Interpolation Technique), LPM-AIT (103B); und
Wiedergewinnen eines Subapertursignalformates, das einem Standard-ScanSAR-Modus (103C) entspricht,
**dadurch gekennzeichnet, dass** der Schritt des Durchführens der Subapertursegmentation an den Daten, die der Bereichskompression und der RMC (102) unterzogen werden, Folgendes umfasst:

Durchführen der Subapertursegmentation an den ScanSAR-Daten, die der Bereichskompression und der RCMC dergestalt unterzogen werden, dass ein einziger Burst für angrenzende Subaperturen überlappt wird, wobei jede Subapertur zwei Bursts und eine Datenlücke umfasst.

2. Verfahren nach Anspruch 1, das des Weiteren Folgendes umfasst:

vor dem Durchführen der Bereichskompression und der RCMC an empfangenen ScanSAR-Daten (101), Auffüllen der Datenlücken zwischen jedem Teilstreifen der ScanSAR-Daten mit Nullen, um kontinuierliche Scan-SAR-Daten zu erzeugen.

3. Verfahren nach Anspruch 1, wobei der Schritt des Entfernens eines Azimut-Chirps aus jeder Subapertur (103A) Folgendes umfasst: Durchführen von Dechirp-Verarbeiten an allen Subaperturdaten in dem Azimut, um den Azimut-Chirp jeder Subapertur zu entfernen; und
wobei der Schritt des Wiedergewinnens eines Subapertursignalformates, das einem Standard-ScanSAR-Modus (103C) entspricht, Folgendes umfasst: Wiedergewinnen des Subapertursignalformates, das dem Standard-Scan-SAR-Modus entspricht, durch eine umgekehrte Operation des Dechirp-Verarbeitens aller Subaperturdaten in dem Azimut.

4. Vorrichtung zum Verbessern der Qualität eines Bildes eines scannenden Radars mit synthetischer Apertur (Scanning Synthetic Aperture Radar), ScanSAR, die ein Bereichsverarbeitungsmodul (61), ein Subapertursegmentationsmodul (62), ein Interpolationsmodul (63) und ein Azimutverarbeitungsmodul (64) umfasst, wobei
das Bereichsverarbeitungsmodul (61) dazu ausgestaltet ist, Bereichskompression und Bereichszellenmigrationskorrektur (Range Cell Migration Correction), RCMC, an jedem Teilstreifen der ScanSAR-Daten (61) durchzuführen;
das Subapertursegmentationsmodul (62) dazu ausgestaltet ist, die Subapertursegmentation an den ScanSAR-Daten durchzuführen, die der Bereichskompression und der RCMC unterzogen werden;
das Interpolationsmodul (63) dazu ausgestaltet ist, die Aperturinterpolation an allen Subaperturdaten durchzuführen; und
das Azimutverarbeitungsmodul (64) dazu ausgestaltet ist, die Azimutkompression an den Subaperturdaten, die der Aperturinterpolation unterzogen werden, durchzuführen,
wobei das Interpolationsmodul (63) speziell dazu ausgestaltet ist:

einen Azimut-Chirp jeder Subapertur zu entfernen;
die Datenlücken zwischen den Subaperturdaten unter Verwendung des linearen Prädiktionsmodells (Linear Prediction Model) LPM-AIT aufzufüllen; und
ein Subapertursignalformat, das einem Standard-ScanSAR-Modus entspricht, wiederzugewinnen,
**dadurch gekennzeichnet, dass** das Subapertursegmentationsmodul (62) speziell dazu ausgestaltet ist:

die Subapertursegmentation an den ScanSAR-Daten, die der Bereichskompression und der RCMC unterzogen werden, dergestalt durchzuführen, dass ein einziger Burst für angrenzende Subaperturen überlappt wird, wobei jede Subapertur zwei Bursts und eine Datenlücke umfasst.

5. Vorrichtung nach Anspruch 4, die des Weiteren ein Vorverarbeitungsmodul (65) umfasst, das dazu ausgestaltet ist, bevor die Bereichskompression und die RCMC an empfangenen ScanSAR-Daten durchgeführt werden, die Datenlücken zwischen jedem Teilstreifen von ScanSAR-Daten mit Nullen aufzufüllen, um kontinuierliche ScanSAR-Daten zu erzeugen.

6. Vorrichtung nach Anspruch 1, wobei das Interpolationsmodul (63) speziell dazu ausgestaltet ist:

das Dechirp-Verarbeiten an allen Subaperturdaten in dem Azimut durchzuführen, um den Azimut-Chirp jeder Subapertur zu entfernen; und

das Subapertursignalformat, das dem Standard-ScanSAR-Modus entspricht, durch eine umgekehrte Operation des Dechirp-Verarbeitens aller Subaperturdaten in dem Azimut wiederzugewinnen.

## Revendications

1. Procédé d'amélioration de la qualité d'image d'un radar à balayage à synthèse d'ouverture, ScanSAR, comprenant :

l'exécution d'une compression de gamme et d'une correction de migration de cellule de gamme, RCMC, sur chaque sous-bande de données ScanSAR (101) ;
l'exécution d'une segmentation par ouverture partielle sur les données ScanSAR soumises à la compression de gamme et à la RCMC (102) ;
l'exécution d'une interpolation d'ouverture sur les données de chaque ouverture partielle (103) ; et
l'exécution d'une compression azimutale sur les données d'ouverture partielle soumises à l'interpolation d'ouverture (104),
où l'étape de l'exécution interpolation d'ouverture sur les données de chaque ouverture partielle (103) comprend :

la suppression d'un piaulement azimutal de chaque ouverture partielle (103A) ;
le comblement des lacunes de données entre les données d'ouverture partielle au moyen d'une technique d'interpolation d'ouverture basée sur un modèle de prédiction linéaire, LPM-AIT (103B) ; et
la restitution d'un format de signal d'ouverture partielle correspondant à un mode ScanSAR standard (103C), **caractérisé en ce que** l'étape d'exécution d'une segmentation par ouverture partielle sur les données soumises à la compression de gamme et à la RCMC (102) comprend :

l'exécution d'une segmentation par ouverture partielle sur les données ScanSAR soumises à la compression de gamme et à la RCMC, de manière à chevaucher une salve pour des ouvertures partielles adjacentes, chaque ouverture partielle comprenant deux salves et une lacune de données.

2. Procédé selon la revendication 1, comprenant en outre :

préalablement à l'exécution de la compression de gamme et de la RCMC sur des données ScanSAR reçues (101), le comblement de lacunes de données entre chaque sous-bande de données ScanSAR par des zéros afin de générer des données ScanSAR continues.

3. Procédé selon la revendication 1, où l'étape de suppression d'un piaulement azimutal de chaque ouverture partielle (103A) comprend : l'exécution d'un traitement de suppression du piaulement sur les données de chaque ouverture partielle dans l'azimut afin d'éliminer le piaulement azimutal de chaque ouverture partielle ; et

où l'étape de restitution d'un format de signal d'ouverture partielle correspondant à un mode ScanSAR standard (103C) comprend : la restitution du format de signal d'ouverture partielle correspondant au mode ScanSAR standard par une opération inverse de traitement de suppression du piaulement de données de chaque ouverture partielle dans l'azimut.

4. Dispositif d'amélioration de qualité d'image d'un radar à balayage à synthèse d'ouverture, comprenant un module de traitement de gamme (61), un module de segmentation par ouverture partielle (62), un module d'interpolation (63) et un module de traitement azimutal (64), où

le module de traitement de gamme (61) est prévu pour exécuter une compression de gamme et une correction de migration de cellule de gamme, RCMC, sur chaque sous-bande de données ScanSAR ;
le module de segmentation par ouverture partielle (62) est prévu pour exécuter une segmentation par ouverture partielle sur les données ScanSAR soumises à la compression de gamme et à la RCMC ;
le module d'interpolation (63) est prévu pour exécuter une interpolation d'ouverture sur les données de chaque ouverture partielle ; et
le module de traitement azimutal (64) est prévu pour exécuter une compression azimutale sur les données d'ouverture partielle soumises à l'interpolation d'ouverture,
où le module d'interpolation (63) est spécifiquement prévu pour :

supprimer un piaulement azimutal de chaque ouverture partielle ;

combler des lacunes de données entre données d'ouverture partielle au moyen d'une technique d'interpolation d'ouverture basée sur un modèle de prédiction linéaire, LPM-AIT ; et

restituer un format de signal d'ouverture partielle correspondant à un mode ScanSAR standard, **caractérisé en ce que** le module de segmentation par ouverture partielle (62) est spécifiquement prévu pour :

exécuter une segmentation par ouverture partielle sur les données ScanSAR soumises à la compression de gamme et à la RCMC, de manière à chevaucher une salve pour des ouvertures partielles adjacentes, chaque ouverture partielle comprenant deux salves et une lacune de données.

5. Dispositif selon la revendication 4, comprenant en outre un module de pré-traitement (65) prévu pour combler des lacunes de données entre chaque sous-bande de données ScanSAR par des zéros afin de générer des données ScanSAR continues, préalablement à l'exécution de la compression de gamme et de la RCMC sur les données ScanSAR reçues.

6. Dispositif selon la revendication 1, où le module d'interpolation (63) est spécifiquement prévu pour :

exécuter un traitement de suppression du piaulement sur les données de chaque ouverture partielle dans l'azimut, afin d'éliminer le piaulement azimutal de chaque ouverture partielle ; et

restituer le format de signal d'ouverture partielle correspondant au mode ScanSAR standard par une opération inverse de traitement de suppression du piaulement de données de chaque ouverture partielle dans l'azimut.

Fig. 1

| Range compression and RCMC are performed on each sub-swath of ScanSAR data | 101 |

| Sub-aperture segmentation is performed on the ScanSAR data subjected to the range compression and the RCMC | 102 |

| Aperture interpolation is performed on each sub-aperture data | 103 |

| Azimuth compression is performed on the sub-aperture data subjected to the aperture interpolation | 104 |

Fig. 2

Stripmap SAR data structure

Range ↑ / Azimuth →

ScanSAR data structure

0    0    0    0

$T_B$    $T_P$

Fig. 3

Range ↑

Uncompressed azimuth ScanSAR data

0   0   0   0   0   0   ...   0   0

Azimuth →

Sub-aperture segmentation

0    First sub-aperture

0    Second sub-aperture

Overlapped burst    0    Third sub-aperture

0    Nth sub-aperture

Fig. 4

| An azimuth chirp of each sub-aperture is removed | — 103A |

↓

| Data gaps between sub-aperture data are filled using LPM-AIT | — 103B |

↓

| A sub-aperture signal format corresponding to a ScanSAR mode is recovered | — 103C |

Fig. 5

Fig. 6

6-A1

6-A2

6-B1

6-B2

Fig. 7

```
┌─────────────────────────────┐
│   Pre-processing mode 65    │
└─────────────────────────────┘
              │
              ▼
┌─────────────────────────────┐
│     Range processing        │
│        module 61            │
└─────────────────────────────┘
              │
              ▼
┌─────────────────────────────┐
│      Sub-aperture           │
│  segmentation module 62     │
└─────────────────────────────┘
              │
              ▼
┌─────────────────────────────┐
│   Interpolation module 63   │
└─────────────────────────────┘
              │
              ▼
┌─────────────────────────────┐
│    Azimuth processing       │
│       module 64             │
└─────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104049254 A

**Non-patent literature cited in the description**

- **NING LI et al.** Extension and Evaluation of PGA in ScanSAR Mode using Full-Aperture Approach. *IEEE Geoscience and Remote Sensing Letters,* 06 January 2015, vol. 12 (4), 870-874
- **DAVID SWINGLER et al.** Line-array beamforming using linear prediction for aperture interpolation and extrapolation. *IEEE Transactions on Acoustics, Speech, and Signal Processing,* 01 January 1989, vol. 37 (1), 16-30
- **THOMAS G. MOORE et al.** *Enhanced Imagery Using Spectral-Estimation-Based Techniques*
- **JOSEPH SALZMAN et al.** interrupted synthetic aperture radar (SAR). *IEEE Aerospace and Electronic Systems Magazine,* 01 May 2002, vol. 17 (5), 33-39
- **QI WANG et al.** A New Algorithm for Sparse Aperture Interpolation. *IEEE Geoscience and Remote Sensing Letters,* 01 July 2007, vol. 4 (3), 480-484
- **RICHARD BAMLER et al.** ScanSAR processing using standard high precision SAR algorithms. *IEEE Transactions on Geoscience and Remote Sensing,* 01 January 1996, vol. 34 (3), 480-484